(19) Europäisches Patentamt
European Patent Office
Office européen des brevets

(11) **EP 3 401 676 A1**

(12) **EUROPÄISCHE PATENTANMELDUNG**

(43) Veröffentlichungstag:
**14.11.2018 Patentblatt 2018/46**

(51) Int Cl.:
***G01N 30/30*** *(2006.01)*

(21) Anmeldenummer: **18170597.1**

(22) Anmeldetag: **03.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **11.05.2017 DE 102017110258**

(71) Anmelder: **SIM Scientific Instruments Manufacturer GmbH 46149 Oberhausen (DE)**

(72) Erfinder: **EICHELBERG, Rolf 45475 Mülheim (DE)**

(74) Vertreter: **Gesthuysen Patent- und Rechtsanwälte Huyssenallee 100 45128 Essen (DE)**

(54) **CHEMISCHES ANALYSEGERÄT MIT EINER MEDIUMAUFBEREITUNGSEINHEIT UND MEDIUMAUFBEREITUNGSEINHEIT**

(57) Die Erfindung betrifft ein chemisches Analysegerät (1) zur Analyse eines Mediums, mit einer Mediumaufbereitungseinheit (2), wobei die Mediumaufbereitungseinheit (2) eine Mediumführungseinrichtung (3) zum Führen des Mediums, eine Temperiereinrichtung (4) zum Temperieren des Mediums und eine Energieversorgungseinheit (5) zum Beaufschlagen der Temperiereinrichtung (4) mit elektrischer Leistung aufweist, und mit einer Steuer- und Auswerteeinheit (6) zum Ansteuern der Mediumaufbereitungseinheit (2) und zum Auswerten von Eigenschaften der Mediumaufbereitungseinheit (2) beschreibenden Messdaten.

Die Aufgabe, ein chemisches Analysegerät (1) anzugeben, bei dem ein Temperieren des Mediums auf vereinfachte und effizientere Art und Weise als im Stand der Technik bekannt, ermöglicht ist, ist dadurch gelöst, dass die Mediumführungseinrichtung (3) aus einem elektrisch isolierenden Material ausgebildet ist, dass die Temperiereinrichtung (4) als eine metallische Beschichtung (7) auf der Außenseite (8) der Mediumführungseinrichtung (3) gebildet ist, wobei die Energieversorgungseinheit (4) die metallische Beschichtung (4) zum Erzeugen einer Temperatur mit elektrischer Leistung beaufschlagt.

Fig. 2c

EP 3 401 676 A1

**Beschreibung**

Die Erfindung betrifft ein chemisches Analysegerät zur Analyse eines Mediums, mit einer Mediumaufbereitungseinheit, wobei die Mediumaufbereitungseinheit eine Mediumführungseinrichtung zum Führen des Mediums, eine Temperiereinrichtung zum Temperieren des Mediums und eine Energieversorgungseinheit zum Beaufschlagen der Temperiereinrichtung mit Energie aufweist, und mit einer Steuer- und Auswerteeinheit zum Ansteuern der Mediumaufbereitungseinheit und zum Auswerten von Eigenschaften der Mediumaufbereitungseinheit beschreibenden Messdaten. Die Erfindung betrifft ferner eine Mediumaufbereitungseinheit und ein Verfahren zum Betreiben eines chemischen Analysegerätes.

Chemische Analysegeräte sind aus dem Stand der Technik in einer Vielzahl von Ausgestaltungen bekannt und dienen der Analyse von Bestandteilen eines Stoffes oder eines Stoffgemisches. Ein bekanntes Gebiet, auf dem chemische Analysegeräte zum Einsatz kommen, ist beispielsweise die Gaschromatografie. Eine Mediumaufbereitungseinheit mit einer Mediumführungseinrichtung und einer Temperiereinrichtung ist in einem chemischen Analysegerät überall dort zu finden, wo ein Medium geführt und auf eine bestimmte Temperatur gebracht werden oder auf einer bestimmten Temperatur gehalten werden soll, also ein Temperieren des Mediums notwendig ist. Eine Mediumaufbereitungseinheit kann also beispielsweise ein Injektor zum Einbringen des temperierten Mediums in eine Trennsäule oder ein Detektor, wie beispielsweise ein Flammenionisationsdetektor sein.

Aus der DE 10 2012 007 403 A1 ist beispielsweise ein chemisches Analysemessgerät mit einer als Injektor ausgebildeten Mediumaufbereitungseinheit bekannt.

Ausgehend von dem Stand der Technik liegt der Erfindung die Aufgabe zugrunde, ein chemisches Analysegerät und eine Mediumaufbereitungseinheit anzugeben, bei dem bzw. der ein Temperieren des Mediums auf vereinfachte und effizientere Art und Weise als im Stand der Technik bekannt, ermöglicht ist.

Die vorgenannte Aufgabe ist gemäß der vorliegenden Erfindung dadurch gelöst, dass die Mediumführungseinrichtung aus einem elektrisch isolierenden Material ausgebildet ist und dass die Temperiereinrichtung als eine metallische Beschichtung auf der Außenseite der Mediumführungseinrichtung gebildet ist, wobei die Energieversorgungseinheit die metallische Beschichtung zum Erzeugen einer Temperatur mit Energie beaufschlagt.

Wenn es heißt, dass die Mediumführungseinrichtung aus einem elektrisch isolierenden Material ausgebildet ist, dann kann dies beispielsweise ein Glas oder eine elektrisch isolierende Keramik sein. Die Außenseite der Mediumführungseinrichtung ist die dem Medium abgewandte Seite der Mediumführungseinrichtung. Dadurch, dass die metallische Beschichtung auf der Außenseite aufgebracht ist, ergibt sich der Vorteil, dass die Herstellung vereinfacht ist. Ein Aufbringen auf die Innenseite wäre mit deutlich erhöhtem Aufwand verbunden. Zudem kann durch das Aufbringen auf der Außenseite eine homogene Schichtdicke über die gesamte Beschichtungsfläche garantiert werden. Ein weiterer Vorteil der Beschichtung auf der Außenseite ist dadurch gegeben, dass die Beschichtung nicht in Kontakt mit dem Medium gelangt und es so nicht zu Reaktionen zwischen Medium und Beschichtung kommen kann. Das hat zum Einen den Vorteil, dass es nicht zu einer unerwünschten reaktiven Beeinflussung oder zu einer Verunreinigung des Mediums kommt. Zum Anderen hat es den Vorteil, dass die metallische Schicht nicht durch das Medium angegriffen und gegebenenfalls beschädigt wird. Durch eine Reaktion mit dem Medium könnte die Schicht ihre Eigenschaften verändern, sodass eine reproduzierbare Temperaturerzeugung nicht gewährleistet werden könnte.

Das erfindungsgemäße Analysemessgerät weist den großen Vorteil auf, dass die metallische Beschichtung direkt auf die Mediumführungseinrichtung aufgebracht ist und somit die Mediumführungseinrichtung und die Temperiereinrichtung durch ein Bauteil gebildet werden. Gegenüber den bekannten chemischen Analysemessgeräten ergibt sich hier der Vorteil, dass die Mediumaufbereitungseinheit eine deutlich vereinfachte Bauweise aufweist. Zudem ist die bestmögliche Wärmeübertragung von der Temperiereinrichtung zu der Mediumführungseinrichtung gegeben, da kein Überträgermedium, wie zum Beispiel Luft, zwischen den beiden Einheiten befindlich ist. Insgesamt weist die beschichtete Mediumführungseinrichtung eine sehr geringe thermische Masse auf, sodass ein schnelles Aufheizen, aber auch ein schnelles Abkühlen der Mediumführungseinrichtung und der Temperiereinrichtung gewährleistet ist. In einem Temperaturzyklus wird in der Regel eine Temperatur von einer niedrigen zu einer hohen Temperatur in vorgebbaren Temperaturschritten und vorgebbaren Verweilzeiten gefahren.

In einer Ausgestaltung des erfindungsgemäßen chemischen Analysegerätes ist die Mediumaufbereitungseinheit als Injektor ausgebildet. Die Mediumführungseinrichtung wird dann durch das Injektorrohr gebildet. Beispielsweise in einem Gaschromatographen dient der Injektor dazu, das zu untersuchende Medium von einer flüssigen in eine gasförmige Phase zu überführen. Hierzu wird das Medium in das Injektorrohr geleitet, welches dann mit der Temperiereinrichtung auf eine Temperatur oberhalb der Siedetemperatur des Mediums gebracht wird. Anschließend wird das gasförmige Medium in eine zu dem Chromatographen gehörende Trennsäule geleitet.

In einer anderen Ausgestaltung ist die Mediumaufbereitungseinheit als Detektor ausgebildet. Insbesondere ist die Mediumaufbereitungseinheit als Flammenionisationsdetektor ausgebildet. Die Mediumführungseinrichtung wird hier durch die Düse des Detektors gebildet, die mit der Temperiereinrichtung geheizt wird.

In einer weiteren Ausgestaltung ist die Mediumaufbereitungseinheit als Trennsäulenanordnung ausgebildet. Die Mediumführungseinrichtung ist dann durch die eigentliche Trennsäule gebildet, die mit der Temperiereinrichtung auf einer konstanten Temperatur gehalten oder auf eine neue Temperatur gebracht wird. Diese Ausgestaltung weist den Vorteil auf, dass auf den Ofen zum Temperieren der Trennsäule verzichtet werden kann.

Das erfindungsgemäße chemische Analysemessgerät ist nicht darauf beschränkt, lediglich genau eine Mediumführungseinheit aufzuweisen. Es kann beispielsweise auch vorgesehen sein, dass das chemische Analysegerät zwei Mediumaufbereitungseinheiten aufweist, nämlich beispielsweise eine als Injektor ausgebildete Mediumaufbereitungseinheit und eine als Detektor ausgebildete Mediumaufbereitungseinheit.

Wie ausgeführt, ist erfindungsgemäß die Temperiereinrichtung der Mediumaufbereitungseinheit als metallische Beschichtung auf der Außenseite der Mediumführungseinheit gebildet. Eine bevorzugte Ausgestaltung des erfindungsgemäßen chemischen Analysemessgerätes ist dadurch gekennzeichnet, dass die metallische Beschichtung aus Platin oder einer Platinlegierung besteht. Platin ist ein chemisches Element, das eine sehr gute Temperatur-Widerstands-Linearität aufweist und eignet sich deshalb sehr für die Verwendung der metallischen Beschichtung. Des Weiteren liegt der Schmelzpunkt von Platin bei 1768,3 °C. Der hohe Schmelzpunkt macht Platin zu einem geeigneten Material für eine Temperiereinrichtung im Analysebereich, da selbst bei der Beaufschlagung mit hoher elektrischer Leistung und dementsprechend hohen erreichbaren Temperaturen der Platinbeschichtung kein Schmelzen und damit Zerstören der Temperiereinrichtung zu befürchten ist. Auch die hohe chemische Stabilität von Platin hat sich im Rahmen der vorliegenden Erfindung als vorteilhaft herausgestellt.

Wie bereits ausgeführt, ist die Mediumführungseinheit aus einem elektrisch isolierenden Material ausgebildet, bevorzugt aus Glas. Die metallische Beschichtung kann durch gängige Verfahren aufgebracht werden. Hierzu zählen zum Beispiel das Ionen-Sputtern und weitere Methoden. Auch bei der Depositionierung weist Platin positive Eigenschaften auf, die ein einfaches Aufbringen auf die Mediumführungseinrichtung ermöglichen. Es hat sich herausgestellt, dass Platin eine hohe Haftfestigkeit auf Glas aufweist und ohne einen zusätzlichen Haftvermittler aufgebracht werden kann; insbesondere die Haftung auf Borosilikatglas ist sehr gut.

Eine wichtige und charakterisierende Größe für die Temperiereinrichtung ist die erreichbare Heizrate. Die Heizrate ist definiert als die Temperaturerhöhung pro Sekunde. Bei der Verwendung von Platin hat sich herausgestellt, dass sehr hohe Heizraten von bis zu 100°C/s erreicht werden können. Derartige Heizraten sind mit bekannten Mediumführungseinrichtungen nicht erzielbar. Im Stand der Technik üblicherweise erreichbare Heizraten liegen im Bereich von ca. 12°C/s.

Neben der bevorzugten Verwendung von reinem Platin bietet sich auch die Verwendung von Platinlegierungen für die metallische Beschichtung an, da hier viele der oben genannten Eigenschaften übertragbar sind.

Die metallische Schicht kann in verschiedenen Schichtdicken auf die Mediumführungseinheit aufgebracht werden. Hierbei wird die Schichtdicke der metallischen Schicht in einer besonders bevorzugten Ausgestaltung des erfindungsgemäßen Analysegerätes derart gewählt, dass sie einen derartigen elektrischen Widerstand aufweist, dass bei Beaufschlagung mit einer vorgebbaren elektrischen Leistung eine maximale vorgebbare Temperatur erreicht wird. In einer bevorzugten Ausgestaltung liegt die Schichtdicke im Bereich einiger zehn bis hundert Nanometer.

Die Mediumführungseinrichtung selbst kann verschiedene Ausgestaltungen annehmen. In einer bevorzugten Ausgestaltung ist vorgesehen, dass die Mediumführungseinrichtung rohrförmig ausgebildet ist. Der Querschnitt der Mediumführungseinrichtung kann hierbei verschiedene Geometrien annehmen. Beispielsweise kann der Querschnitt rund, elliptisch, rechteckig oder quadratisch ausgebildet sein. In der Praxis wird oft ein runder Querschnitt verwendet, da eine derartige Mediumführungseinrichtung einfach herzustellen ist. Wenn hier davon die Rede ist, dass der Querschnitt rund, elliptisch, rechteckig oder quadratisch ist, dann ist damit die Geometrie des Außenumfangs im Querschnitt der Mediumführungseinrichtung gemeint. Es können aber auch sämtliche andere denkbare Geometrien realisiert werden, die Erfindung ist nicht auf runde, elliptische, quadratische oder rechteckige Formen beschränkt. Insbesondere kann auch vorgesehen sein, dass die Geometrie des Außenquerschnitts von der Geometrie des Innenquerschnitts abweicht, wobei der Innenquerschnitt dann die Geometrie der Mediumführung angibt. Beispielsweise kann also vorgesehen sein, dass die Mediumführungseinrichtung als rechteckiges Rohr ausgebildet ist, der Mediumführung jedoch durch eine runde Bohrung in dem rechteckigen Rohr realisiert ist.

In einer bevorzugten Ausgestaltung ist die Mediumführungseinrichtung durch ein Borosilikatglasrohr mit rundem Querschnitt gebildet, wobei das Borosilikatglasrohr eine Länge von 10 cm, einen Außendurchmesser von 4 mm und einen inneren (hohlen) Durchmesser von 0,9 mm aufweist. Die Temperiereinrichtung ist in der bevorzugten Ausgestaltung durch eine 60 nm dicke Platinbeschichtung realisiert.

Erfindungsgemäß ist vorgesehen, dass die Temperiereinrichtung als eine metallische Beschichtung auf der Außenseite der Mediumführungseinrichtung gebildet ist. Um eine Temperatur zu erzeugen, wird die metallische Beschichtung von der Energieversorgungseinheit mit elektrischer Leistung beaufschlagt. Hierzu ist vorgesehen, dass die Energieversorgungseinheit über Kontakte oder Kontaktvorrichtungen mit der Temperiereinrichtung, also der metallischen Beschichtung verbunden ist. Hierbei befindet sich bevorzugt ein Kontakt oder eine Kontaktvorrichtung in Führungsrichtung des Mediums gesehen im vorderen Bereich der Beschichtung, bzw. am vorderen Ende der Beschichtung und eine zweiter Kontakt oder eine zweite Kontaktvorrichtung in Führungsrichtung des Mediums gesehen im hinteren Bereich der Beschichtung, bzw. am hinteren Ende der Beschichtung.

Um eine gute Kontaktierung zu ermöglichen, ist in einer bevorzugten Ausgestaltung vorgesehen, dass die Energieversorgungseinheit die metallische Beschichtung über eine federnd ausgebildete Kontaktvorrichtung kontaktiert. Eine federnd ausgebildete Kontaktvorrichtung weist den Vorteil auf, dass die Kontaktvorrichtung eine Federkraft auf die Mediumführungseinrichtung ausübt, auf der sich die zu kontaktierende metallische Schicht befindet. Dadurch kann gewährleistet werden, dass ein Kontakt reproduzierbar hergestellt ist. Bei einer bevorzugten Ausführungsform weist die Kontaktvorrichtung eine Mehrzahl von federnden Stiften auf. Weiter bevorzugt sind die Stifte um den Umfang der Mediumführungseinrichtung in gleichen Abständen angeordnet. Auf die Mediumführungseinrichtung wirkt also aus mehreren Richtungen eine Federkraft. Diese Art der Kontaktierung weist den Vorteil auf, dass die Mediumführungseinrichtung von den Stiften gehalten wird und die Kontaktierung ohne zusätzliche Hilfsmittel, beispielsweise ein Verlöten, gewährleistet ist. Gleichzeitig ermöglicht eine derartige Kontaktierung eine werkzeugfreie Montage und/oder Demontage der Mediumführungseinrichtung.

Eine weitere und besonders bevorzugte Kontaktierungsmöglichkeit ist durch als spiralförmig gewundene Drähte ausgebildete Kontakte gegeben, also beispielsweise durch eine Spiralfeder geeigneter Abmessung. Die zu einer Spirale gewundene Drähte schmiegen sich hierbei um den Umfang der mit der Temperiereinrichtung beschichteten Mediumführungseinrichtung an die Temperiereinrichtung an. Mit jeder Windung der spiralförmigen Anordnung wird dann ein elektrischer Kontakt zu der Temperatureinrichtung hergestellt. Um einen Kontakt zwischen den spiralförmigen Drähten und der metallischen Schicht zu garantieren und zu verbessern, ist der Draht leicht unter mechanische Spannung gesetzt - gespannt - und übt somit über den ganzen Umfang eine Kraft auf die Mediumführungseinrichtung aus.

Insgesamt ist festzuhalten, dass die Erfindung nicht auf die zwei näher erläuterten Methoden der Kontaktierung begrenzt ist. Es sind jegliche aus dem Stand der Technik bekannte und geeignete Kontaktierungsmethoden auch bei dem erfindungsgemäßen chemischen Analysegerät anwendbar. Eine Kontaktierung könnte beispielsweise auch in einer Lötverbindung bestehen.

Um die Kontaktierung weiter zu verbessern, ist eine bevorzugte Ausgestaltung dadurch gekennzeichnet, dass die metallische Beschichtung im Bereich der Kontakte eine erhöhte Oberflächenrauigkeit aufweist.

Die Oberfläche kann hier beispielsweise durch Druckluftstrahlen mit einem festen Strahlmittel aufgeraut sein. Unter diese Methode fällt beispielsweise das Sandstrahlen, das sich auch in besonderer Weise für die Behandlung einer Beschichtung aus Platin oder einer Platinlegierung eignet.

Eine weitere Ausgestaltung des erfindungsgemäßen chemischen Analysegeräts ist dadurch gekennzeichnet, dass die metallische Beschichtung in Umfangsrichtung der Mediumführungseinrichtung gesehen unterbrochen ist, dass die Mediumführungseinrichtung also in Umfangsrichtung gesehen Teilbereiche bildet, die keine metallische Beschichtung aufweisen. Bei der Ausgestaltung ist die Temperiereinrichtung also beispielsweise aus mehreren beschichteten Bereichen gebildet. Je nach Material ist die Beschichtung mit hohen Kosten verbunden. Aus der erfindungsgemäßen Ausgestaltung resultiert demnach der Vorteil, dass Beschichtungsmaterial und damit auch Kosten gespart werden kann/können. Die beschichteten und unbeschichteten Bereiche können beispielsweise gleich groß vorgesehen sein. Ebenfalls denkbar ist, dass die unbeschichteten Bereiche deutlich kleiner, insbesondere schmaler ausfallen, als die beschichteten Bereiche. Ebenfalls die Anzahl der beschichteten Bereiche kann individuell ausgewählt und angepasst werden. Die beschichteten Bereiche können beispielsweise an die Geometrie der Mediumführungseinrichtung angepasst werden. Weist die Mediumführungseinrichtung einen quadratischen oder rechteckigen Querschnitt auf, so kann die Beschichtung beispielsweise auf zwei sich gegenüberliegenden Seiten der Mediumführungseinrichtung aufgebracht sein. Zu beachten ist, dass jeder Bereich kontaktiert werden muss, um mit Energie beaufschlagt werden zu können.

Die metallische Beschichtung kann beispielsweise auch spiralförmig oder mäanderförmig auf der Mediumführungseinrichtung aufgebracht sein. Durch die spiralförmige oder mäanderförmige Beschichtung lässt sich ebenfalls Beschichtungsmaterial sparen.

Neben dem chemischen Analysegerät betrifft die Erfindung ebenfalls eine Mediumaufbereitungseinheit für ein chemisches Analysegerät. Die Mediumaufbereitungseinheit weist hierbei eine Mediumführungseinrichtung zum Führen des Mediums, eine Temperiereinrichtung zum Temperieren des Mediums und eine Energieversorgungseinheit zum Beaufschlagen der Temperiereinrichtung mit Energie auf. Die erfindungsgemäße Mediumaufbereitungseinheit ist dadurch gekennzeichnet, dass die Mediumführungseinrichtung aus einem elektrisch isolierenden Material ausgebildet ist und dass die Temperiereinrichtung als eine metallische Beschichtung auf der Außenseite der Mediumführungseinrichtung gebildet ist. Zum Erzeugen einer Temperatur beaufschlagt die Energieversorgungseinheit die metallische Beschichtung mit Energie. Bei der erfindungsgemäßen Mediumaufbereitungseinheit ergibt sich also ebenfalls der Vorteil, dass die Mediumführungseinrichtung und die Temperiereinrichtung im Wesentlichen als ein einziges Bauteil ausgebildet sind. Hierdurch ist es möglich, auf sehr effiziente Art und Weise die Mediumführungseinrichtung auf eine - gewünschte - Temperatur zu bringen.

Eine Ausgestaltung der Mediumaufbereitungseinheit ist dadurch gekennzeichnet, dass die metallische Schicht aus Platin oder einer Platinlegierung besteht. Die Schichtdicke ist bei einer bevorzugten Ausgestaltung derart gewählt, dass sie einen derartigen elektrischen Widerstand aufweist, dass bei Beaufschlagung mit einer vorgebbaren elektrischen Leistung eine maximale vorgebbare Temperatur erreicht wird.

Eine bevorzugte Ausgestaltung der Mediumaufbereitungseinheit zeichnet sich dadurch aus, dass die Mediumführungseinrichtung rohrförmig ausgebildet ist und einen runden, elliptischen, rechteckigen oder quadratischen Querschnitt aufweist.

Um eine Kontaktierung der Temperiereinrichtung durch die Energieversorgungseinheit zu ermöglichen, ist auch bei der erfindungsgemäßen Mediumaufbereitungseinheit vorgesehen, dass die Energieversorgungseinheit die Temperiereinrichtung über Kontakte oder Kontakteinrichtungen kontaktiert. Die im Zusammenhang mit dem chemischen Analysegerät gemachten Ausführungen sind hier auf die Mediumaufbereitungseinheit übertragbar.

Ebenfalls ist bei einer bevorzugten Ausgestaltung der Mediumaufbereitungseinheit vorgesehen, dass die metallische Beschichtung in Umfangsrichtung der Mediumführungseinrichtung gesehen unterbrochen ist. Die Mediumführungseinrichtung weist also in Umfangsrichtung gesehen Teilbereiche auf, die keine metallische Beschichtung aufweisen. Die Temperierungseinrichtung ist demnach aus mehreren beschichteten Bereichen gebildet.

Insgesamt ergeben sich die im Zusammenhang mit dem chemischen Analysegerät aufgeführten Vorteile und Vorzüge der Ausgestaltungen ebenfalls für die erfindungsgemäße Mediumaufbereitungseinheit mit ihren Ausgestaltungen.

Die Erfindung betrifft ebenfalls ein Verfahren zum Betreiben eines chemischen Analysegerätes mit einer Mediumaufbereitungseinheit und mit einer Steuer- und Auswerteeinheit zum Ansteuern der Mediumaufbereitungseinheit und zum Auswerten von Eigenschaften der Mediumaufbereitungseinheit. Die Mediumaufbereitungseinheit weist eine Mediumführungseinrichtung zum Führen des Mediums auf, die aus einem isolierenden Material ausgebildet ist und weist eine Temperiereinrichtung zum Temperieren des Mediums auf, die als eine metallische Beschichtung auf der Außenseite der Mediumführungseinrichtung gebildet ist.

Das erfindungsgemäße Verfahren zeichnet sich dadurch aus, dass in einem ersten Schritt die Temperiereinrichtung mit elektrischer Energie beaufschlagt wird, dass in einem zweiten Schritt der elektrische Widerstand der Temperiereinrichtung ermittelt wird und dass in einem dritten Schritt ein zu dem ermittelten Widerstandswert korrespondierender Ist-Temperaturwert ermittelt wird. Der Ist-Temperaturwert gibt dabei den aktuellen Temperaturwert an. Die hier als drei Schritte bezeichneten Vorgänge können selbstverständlich gleichzeitig ablaufen.

Wenn es heißt, dass die Temperiereinrichtung mit elektrischer Energie beaufschlagt wird, dann bedeutet das, dass in einer Ausgestaltung eine definierte Spannung an die Temperiereinrichtung angelegt wird. In einer anderen Ausgestaltung wird die Temperiereinrichtung mit einem definierten Strom beaufschlagt. Im ersten Fall stellt sich dann in Abhängigkeit von dem elektrischen Widerstand der Beschichtung ein elektrischer Strom ein, im zweiten Fall fällt eine entsprechende Spannung ab.

Der elektrische Widerstand der Temperiereinrichtung wird durch die Messung der jeweils anderen Größe (Strom, bzw. Spannung) bestimmt. Beim Anlegen einer Spannung wird der Strom gemessen und aus Strom- und Spannungswert der elektrische Widerstand bestimmt. Wird die Temperiereinrichtung mit einem Strom beaufschlagt, wird zur Bestimmung des Widerstandes die resultierende Spannung gemessen und der Widerstand ebenfalls aus den jeweiligen Werten berechnet.

Das erfindungsgemäße Verfahren weist den Vorteil auf, dass die Temperatur anhand eines elektrischen Widerstandswertes bestimmt wird, der allein aufgrund der ohnehin bekannten elektrischen Anschlussgrößen bestimmbar ist. Es kann also auf einen zusätzlichen Temperatursensor verzichtet werden. Aus dem Stand der Technik ergeben sich oft die Probleme, dass keine präzise Temperaturmessung möglich ist, weil der Temperatursensor in einem bestimmten Abstand von der Mediumführungseinrichtung angeordnet ist. Des Weiteren ergibt sich das Problem, dass der Temperatursensor im Inneren der Mediumführungseinrichtung angeordnet ist und somit den Fluss des Mediums stört. Diese Nachteile können durch das erfindungsgemäße Verfahren eliminiert werden.

Zur Ermittlung des Ist-Temperaturwertes aus dem ermittelten Widerstandswert ist es notwendig, dass eine Kalibrierung des Systems durchgeführt worden ist. In einer Ausführungsform des erfindungsgemäßen Verfahrens ist demnach vorgesehen, dass zur Ermittlung des Ist-Temperaturwertes vor dem ersten Verfahrensschritt eine Kalibrierung vorgenommen wird. Für die Kalibrierung wird die Temperiereinrichtung mit einer vorgegebenen Energie beaufschlagt und dann die aus der Beaufschlagung resultierende Temperatur mit einem Temperatursensor gemessen. Mit dem gemessenen Temperaturmesswert wird anschließend ein temperaturabhängiger Widerstandswert berechnet. Der formelmäßige Zusammenhang zwischen Temperatur und elektrischem Widerstand ergibt sich beispielsweise bei der Verwendung von Platin als metallische Beschichtung in einem Temperaturbereich von 0°C bis 850°C aus der Formel

$$R(T) = R_0 \cdot \left(1 + AT + BT^2\right),$$

wobei die Koeffizienten A und B für jede Mediumaufbereitungseinheit individuell bestimmt werden muss. Die Werte sind beispielsweise abhängig von der Geometrie der beschichteten Mediumführungseinrichtung und der aufgebrachten Schichtdicke der Platinbeschichtung. $R_0$ ist der nominale Widerstandswert bei einer Temperatur von 0°C. Die Werte können im Rahmen einer Kalibrierung bestimmt werden.

Die ermittelten Kalibrierdaten werden in der Steuer- und Auswerteeinheit hinterlegt. Zur Ermittlung des Ist-Temperaturwertes wird der gemessene Widerstandswert mit den Kalibrierdaten abgeglichen.

In der Chromotographie, insbesondere der Gaschromatographie, in der das erfindungsgemäße Verfahren zum Einsatz kommt, werden üblicherweise Temperaturprofile gefahren, um die Trennung verschiedener Stoffbestandteile des zu untersuchenden Mediums zu beschleunigen. Hierbei werden üblicherweise verschiedene Soll-Temperaturwerte von niedrigen zu hohen Temperaturwerten angesteuert. Eine bevorzugte Ausgestaltung des erfindungsgemäßen Verfahrens ist dadurch gekennzeichnet, dass ein Soll-Temperaturwert vorgegeben wird und dann der Ist-Temperaturwert mit dem Soll-Temperaturwert verglichen wird. Aufgrund der Differenz zwischen Ist- und Soll-Temperaturwert - der sogenannten Regeldifferenz - berechnet die Steuer- und Auswerteeinheit mit einem Regelalgorithmus eine Stellgröße für die Energieversorgungseinheit, woraufhin die Energieversorgungseinheit die Temperiereinrichtung mit einer entsprechend angepassten Energie pro Zeit - also Leistung - beaufschlagt, wodurch die Regeldifferenz ausgeregelt wird. Ein Temperaturprofil umfasst mehrere Soll-Temperaturwerte, die nacheinander wie oben beschrieben eingeregelt werden.

Eine bevorzugte Ausführungsform des erfindungsgemäßen Verfahrens ist dadurch gekennzeichnet, dass der Regelalgorithmus in der Steuer- und Auswerteeinheit einen PID-Regler implementiert. Aufgrund des Übertragungsverhaltens der Strecke wird bei nicht verschwindendem integrativen Anteil (I-Anteil) des PID-Reglers jede Regeldifferenz ausgeregelt. Das Reaktionsverhalten des Systems kann bei geeigneter Wahl der Regelparameter in weiten Bereichen eingestellt werden (schnell mit Überschwingen, aperiodischer Grenzfall, usw.). Ebenfalls denkbar ist die Implementierung eines PI-Reglers. Der Regler kann als digitales Abtastsystem oder als analoge Regelschaltung implementiert sein. Denkbar sind weitere Regelungsmechanismen zur Ausregelung des Fehlers. Es können auch unstetige Regler wie Zwei- oder Mehrpunktregler eingesetzt werden. Insbesondere wenn Beschichtungen realisiert werden, die einen stark nichtlinearen Zusammenhang zwischen Temperatur und ohmschem Widerstand haben, bietet sich der Einsatz von nichtlinearen Reglern an, die beispielsweise auf den Konzepten der Fuzzy-Logik oder der neuronalen Netze beruhen.

Das oben beschriebene Verfahren lässt sich mit allen seinen bevorzugten Ausführungsformen ebenfalls auf ein Verfahren zum Betreiben einer Mediumaufbereitungseinheit übertragen, das auch Gegenstand der Erfindung ist. Im Einzelnen gibt es nun verschiedene Möglichkeiten, das erfindungsgemäße chemische Analysegerät, die erfindungsgemäße Mediumaufbereitungseinheit und das erfindungsgemäße Verfahren auszugestalten und weiterzubilden. Dazu wird verwiesen sowohl auf die den Patentansprüchen 1, 11 und 12 nachgeordneten Patentansprüche als auch auf die Beschreibung bevorzugter Ausführungsbeispiele in Verbindung mit der Zeichnung. In der Zeichnung zeigen

Fig. 1a ein erfindungsgemäßes chemisches Analysegerät in einer ersten Ausführungsform in schematischer Darstellung,

Fig. 1b ein erfindungsgemäßes chemisches Analysegerät in einer zweiten Ausführungsform in schematischer Darstellung,

Fig. 2a eine erfindungsgemäße Mediumaufbereitungseinheit in einer ersten Ausführungsform,

Fig. 2b die Mediumführungseinrichtung aus Figur 2a im Querschnitt,

Fig. 2c eine erfindungsgemäße Mediumaufbereitungseinheit in einer zweiten Ausführungsform,

Fig. 2d eine erfindungsgemäße Mediumaufbereitungseinheit in einer dritten Ausführungsform,

Fig. 2e eine Mediumführungseinrichtung mit einer Temperiereinrichtung,

Fig. 3 eine erfindungsgemäße Mediumaufbereitungseinheit in einer dritten Ausführungsform mit schematisch dargestelltem Regelkreislauf zur Regulierung der Temperatur der Temperiereinrichtung,

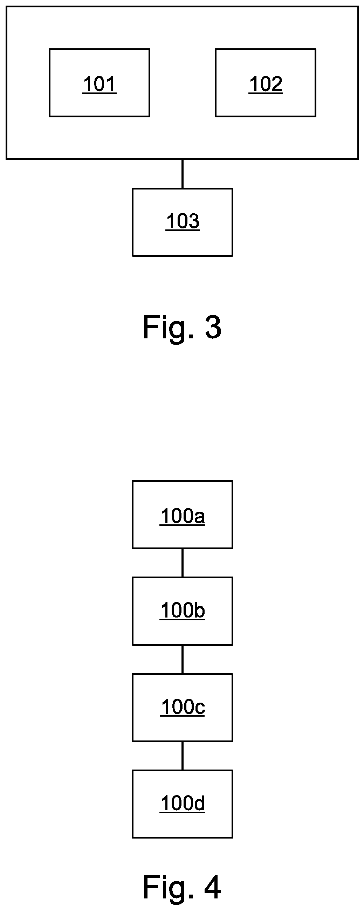

Fig. 3 ein Blockdiagramm eines erfindungsgemäßen Verfahrens zum Betreiben des erfindungsgemäßen chemischen Analysegerätes,

Fig. 4 ein Blockdiagramm eines erfindungsgemäßen Verfahrens zum Kalibrieren,

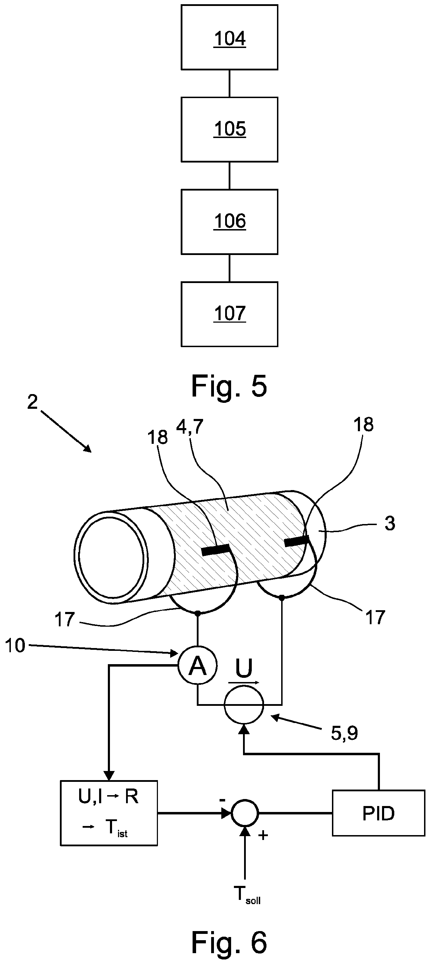

Fig. 5 ein Blockdiagramm eines erfindungsgemäßen Verfahrens zum Einstellen eines vorgegebenen Soll-Temperaturwerts und

Fig. 6 eine erfindungsgemäße Mediumaufbereitungseinheit in einer dritten Ausführungsform mit schematisch dargestelltem Regelkreis zur Regelung der Temperatur der Temperiereinrichtung.

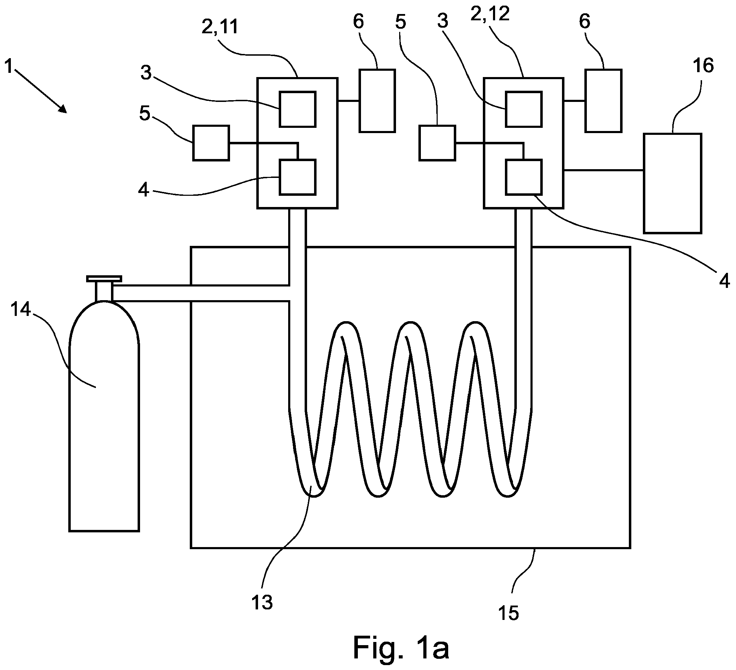

In Figur 1a ist ein chemisches Analysegerät 1 dargestellt, das zur Analyse eines Mediums dient. Das dargestellte chemische Analysegerät 1 ist ein Gaschromatograph und dient dazu, ein Medium auf seine Bestandteile hin zu analysieren. Das dargestellte chemische Analysegerät 1 weist zwei Mediumaufbereitungseinheiten 2 auf, wobei die Mediumaufbereitungseinheiten 2 selbst eine Mediumführungseinrichtung 3 und eine Temperiereinrichtung 4 aufweisen. Die Mediumführungseinrichtung 3 dient zum Führen des Mediums, wohingegen die Temperiereinrichtung 4 zum Temperieren des Mediums ausgebildet ist. Des Weiteren weist die Mediumaufbereitungseinrichtung 2 eine Energieversorgungseinheit 5 auf, die die Temperiereinrichtung 4 mit Energie, bzw. Leistung beaufschlagt. Eine zu dem chemischen Analysegerät 1 gehörende Steuer- und Auswerteeinheit 6 dient zum Ansteuern der Mediumaufbereitungseinheit 2 und zum Auswerten von Eigenschaften der Mediumaufbereitungseinheit 2 beschreibenden Messdaten.

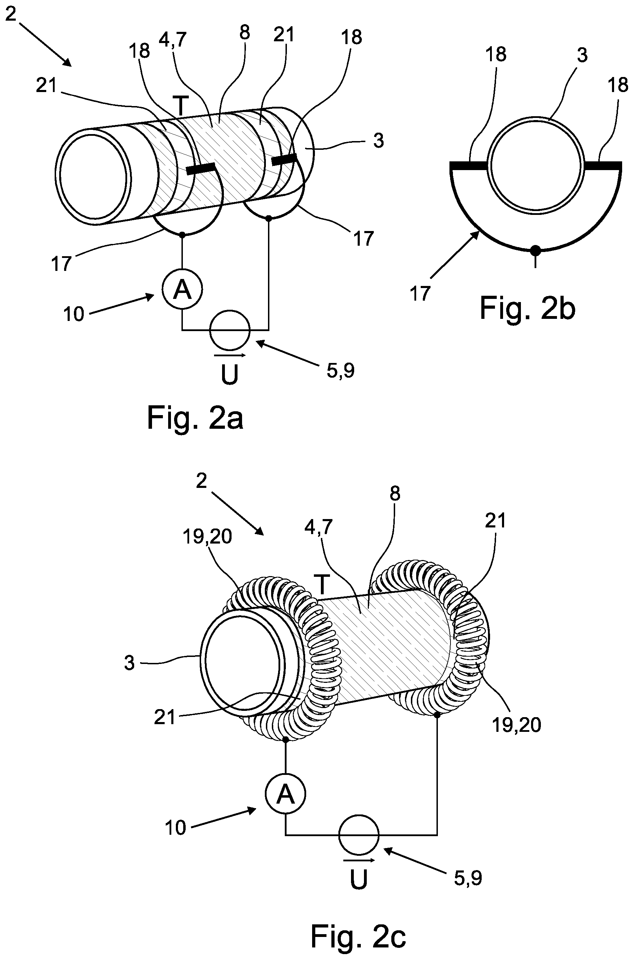

In Figur 2a ist eine Mediumaufbereitungseinheit 2 dargestellt. Die Mediumaufbereitungseinheit 2 weist eine aus einem isolierenden Material, hier eine aus Glas gefertigte Mediumführungseinrichtung 3 auf. Die Temperiereinrichtung 4 ist als eine metallische Beschichtung 7 auf der Außenseite 8 der Mediumführungseinrichtung 3 gebildet. Um mit der Temperiereinrichtung 4 eine Temperatur T zu erzeugen, wird die Temperiereinrichtung 4 durch die Energieversorgungseinheit 5 mit elektrischer Leistung beaufschlagt. In dem dargestellten Beispiel ist die Energieversorgungseinheit 5 durch eine Spannungsquelle 9 realisiert. Nicht dargestellt, aber ebenfalls denkbar ist, dass die Energieversorgungseinheit 5 durch eine Stromquelle realisiert wird. Mit Hilfe eines Amperemeters 10 wird der sich einstellende Strom gemessen und anschließend der elektrische Widerstandswert der Temperiereinrichtung 4, also der metallischen Beschichtung 7 bestimmt. Der Widerstandswert korrespondiert zu einem die aktuelle Temperatur beschreibenden Temperaturwert T.

Die dargestellte Mediumaufbereitungseinheit weist demnach mehrere Vorteile auf. Zum Einen sind die Mediumführungseinrichtung 3 und die Temperiereinrichtung 4 als ein Bauteil realisiert, da die Temperiereinrichtung 4 aus der metallischen Beschichtung 7 der Mediumführungseinrichtung 3 besteht. Hieraus ergibt sich der Vorteil der einfachen Bauweise und damit reduzierter Wartung. Da zudem die Temperiereinrichtung 4 direkt auf der Mediumführungseinrichtung 3 haftet, sich also kein Medium, wie beispielsweise Luft zwischen der Temperiereinrichtung 4 und der Mediumführungseinrichtung 3 befindet, ist die bestmögliche Wärmeübertragung von Temperiereinrichtung 4 auf die Mediumführungseinrichtung 3 gegeben. Selbst größtmögliche Wärmemengen lassen sich so kurzzeitig in die Mediumführungseinrichtung 3 übertragen, sodass Heizraten im Bereich von 100°C/s erzielt werden können. Zum Anderen ergibt sich der große Vorteil, dass die Temperatur T der Temperiereinrichtung 4 direkt über den ermittelten Widerstandswert berechnet werden kann. Ein gesonderter Temperaturfühler ist bei der vorliegenden Mediumaufbereitungsvorrichtung 2 nicht notwendig, was zu einer weiteren Reduzierung der notwendigen Bauteile führt. Zudem ist eine besonders präzise Temperaturbestimmung möglich.

Bei dem in Figur 1a dargestellten chemischen Analysegerät 1 sind die Mediumaufbereitungseinheiten 2 einmal als Injektor 11 und einmal als Detektor 12 ausgestaltet. In dem dargestellten Gaschromatographen dient der Injektor 11 dazu, das zu untersuchende Medium von einer flüssigen in eine gasförmige Phase zu überführen. Hierzu wird das Medium in die Mediumführungseinrichtung 3 geleitet, die mit der Temperiereinrichtung 4 auf eine Temperatur T oberhalb der Siedetemperatur des Mediums gebracht wird. Das nun gasförmige Medium wird mit einem Trägergas 14 in eine Trennsäule 13 geleitet. In der Trennsäule 13 wird das Medium in seine einzelnen Komponenten separiert. Die Trennsäule 13 selbst befindet sich in einem Ofen 15, der entweder auf eine konstante Temperatur eingestellt ist, so dass die Trennsäule 13 isotherm gehalten wird, oder mit dem eine Temperatursequenz gefahren werden kann, um die Trennsäule auf verschiedene Temperaturen zu bringen. Am Ende der Trennsäule 13 befindet sich der Detektor 12, der vorliegend als Flammenionisationsdetektor ausgebildet ist und mit dem die einzelnen Komponenten des Mediums detektiert werden. Die Mediumführungseinrichtung 3 und die Temperiereinrichtung 4 sind bei dem Detektor 12 in der Düse zu finden. Mit Hilfe eines Computersystems 16 und entsprechender Auswertesoftware können die detektierten Signale ausgewertet werden.

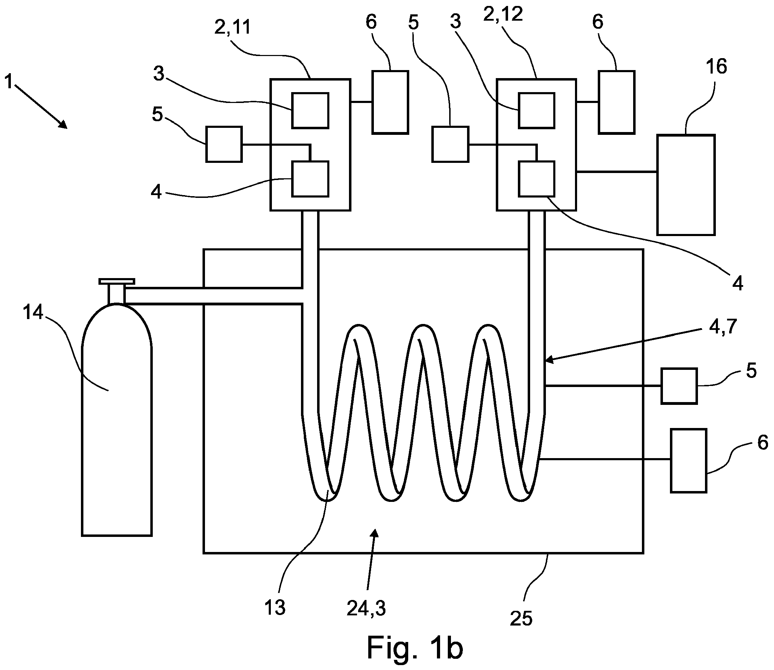

In Figur 1b dargestellt ist eine Ausgestaltung eines chemischen Analysegeräts, das sich von dem in Figur 1a dargestellten chemischen Analysegerät dadurch unterscheidet, dass die Trennsäulenanordnung 24 eine Mediumaufbereitungseinrichtung 3 bildet. Die Trennsäule 13, die die Mediumführungseinrichtung 2 bildet, ist mit einer metallischen Beschichtung 7 beschichtet, die als Temperiereinrichtung 4 dient. Eine Energieversorgungseinheit 5 dient dazu, die Temperiereinrichtung 4 zum Erzeugen einer Temperatur mit elektrischer Leistung zu beaufschlagen. Die Trennsäulenanordnung 24 weist eine eigene Steuer- und Auswerteeinheit 6 auf. Diese Ausgestaltung weist den Vorteil auf, dass auf den Ofenraum und auf das aufwendige Heizen der Trennsäule 13 durch den Ofen verzichtet werden kann. An Stelle des Ofenraums weist die dargestellte Ausgestaltung einen Raum 25 auf, mit dem die Trennsäulenanordnung 24 thermisch von der Umgebung abgegrenzt werden kann.

Es hat sich herausgestellt, dass die Verwendung von Platin oder Platinlegierungen für die metallische Beschichtung 7 besonders geeignet ist. Platin weist eine sehr gute Temperatur-Widerstandslinearität und mit 1768,3°C einen sehr hohen Schmelzpunkt auf. Vor allem diese beiden Eigenschaften machen Platin zu einem besonders geeigneten Material für die metallische Beschichtung 7. So kann - was insbesondere im Analysebereich von Bedeutung ist - die Temperiereinrichtung 4 mit hoher elektrischer Leistung beaufschlagt werden, um eine entsprechend hohe Temperatur T zu erzeugen, ohne dass die Gefahr besteht, dass das Platin schmilzt und so die Temperiereinrichtung 4 zerstört werden könnte. Die Schichtdicke der metallischen Beschichtung 7 ist derart zu wählen, dass sie einen derartigen elektrischen Widerstand aufweist, dass bei Beaufschlagung mit einer vorgebbaren elektrischen Leistung eine maximale vorgebbare Temperatur erreicht wird.

Die in Fig. 2a dargestellte Mediumführungseinrichtung 3 ist rohrförmig ausgebildet und weist einen runden Querschnitt auf. Nicht dargestellt, aber ebenfalls möglich sind sämtliche andere geometrische Grundformen für den Querschnitt der Mediumführungseinrichtung 3. Die metallische Beschichtung 7 besteht vorliegend aus Platin. Damit die Energieversorgungseinheit 5 die metallische Beschichtung 7 mit elektrischer Leistung beaufschlagen kann, ist die Energieerzeugungseinheit 5 über federnd ausgebildete Kontaktvorrichtungen 17 mit der als metallische Beschichtung 7 gebildeten Temperiereinrichtung 4 verbunden. Die Kontaktvorrichtungen 17 weisen zwei federnde Stifte 18 auf, die um den Umfang der Mediumführungseinrichtung 3 in gleichen Abständen angeordnet sind. Dies ist insbesondere aus Figur 2b ersichtlich. Die federnden Stifte 18 üben eine Federkraft auf die Mediumführungseinrichtung aus und ermöglichen so ein werkzeugfreies und reversibles Kontaktieren.

In Figur 2c dargestellt ist eine weitere Ausführungsform, die sich von der in Figur 2a dargestellten durch die Art der Kontaktierung der Energieversorgungseinheit 5 unterscheidet. Die in Figur 2c dargestellte Ausführungsform weist zwei spiralförmig gewundene Drähte 19 als Kontakte 20 auf. Die spiralförmig gewundenen Drähte schmiegen sich an die Temperiereinrichtung 4 an und stellen so mit jeder Windung einen elektrischen Kontakt her. Zur Verbesserung des elektrischen Kontaktes ist der Draht leicht gespannt und übt über den gesamten Umfang eine Kraft auf die Mediumführungseinrichtung 2 aus.

Um die Kontaktierung zu verbessern, weist die in den in Figuren 2a und 2c dargestellte metallische Beschichtung 7 in den Bereichen 21 der Kontakte 17, 18, 19, 20 eine erhöhte Oberflächenrauigkeit auf. Diese ist in den dargestellten Ausführungsbeispielen durch Sandstrahlen hergestellt worden.

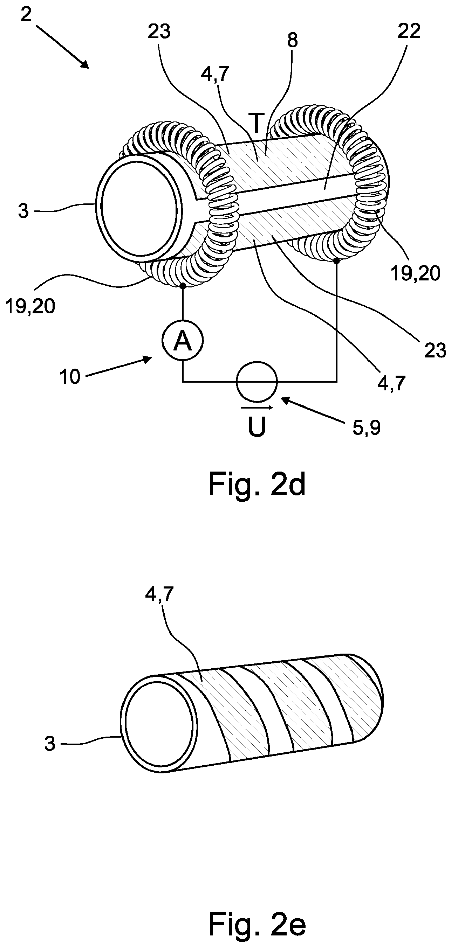

In Figur 2d dargestellt ist eine weitere Ausführungsform einer Mediumaufbereitungseinheit 2. Die hier dargestellte Mediumaufbereitungseinheit 2 unterscheidet sich von den bisher dargestellten Mediumaufbereitungseinheiten 2 im Wesentlichen dadurch, dass die metallische Beschichtung 7 in Umfangsrichtung der Mediumführungseinrichtung 3 gesehen unterbrochen ist. Die Mediumführungseinrichtung 3 weist Teilbereiche 22 auf, die nicht beschichtet sind. Die Temperiereinrichtung 4 ist also aus mehreren beschichteten Bereichen 23 gebildet. Diese Ausführungsform erweist sich als vorteilhaft, wenn für die Beschichtung 7 sehr teure Materialien verwendet werden, da hier Material eingespart werden kann. Durch die Verwendung der spiralförmig gewundenen Drähte 19 als Kontakte 20 ist gewährleistet, dass jeder Bereich 23 kontaktiert ist und mit elektrischer Leistung beaufschlagt werden kann. Dies führt zu einem gleichmäßig verteilten Strombelag und damit einem gleichmäßigen Wärmemengeneintrag in die Mediumführungseinrichtung 2 und damit zu einer gleichmäßigen Temperaturverteilung.

Die Figur 2e zeigt eine Mediumführungseinrichtung 3, bei der die metallische Beschichtung 7 ebenfalls in Umfangsrichtung der Mediumführunsgeinrichtung 3 gesehen unterbrochen ist. Im Gegensatz zu der in Figur 2d dargestellten Ausführungsform ist die Temperiereinrichtung 4 jedoch nicht aus mehreren beschichteten Bereichen gebildet, sondern die metallische Beschichtung 7 windet sich spiralförmig um die Mediumführungseinrichtung 3. Nicht dargestellt, aber ebenfalls denkbar ist eine mäanderförmige Beschichtung.

In Figur 3 dargestellt ist ein Blockdiagramm eines Verfahrens zum Betreiben eines chemischen Analysegeräts. Das Analysegerät weist eine Mediumaufbereitungseinheit auf, wobei die Mediumaufbereitungseinheit selbst eine Mediumführungseinrichtung zum Führen des Mediums, eine Temperiereinrichtung zum Temperieren des Mediums und eine Energieversorgungseinheit zum Beaufschlagen der Temperiereinrichtung mit elektrischer Leistung aufweist. Zu dem Analysegerät gehört ebenfalls eine Steuer- und Auswerteeinheit zum Ansteuern der Mediumaufbereitungseinheit und zum Auswerten von Eigenschaften der Mediumaufbereitungseinheit beschreibenden Messwerten. Die Mediumführungseinrichtung der Mediumaufbereitungseinheit ist aus einem elektrisch isolierenden Material ausgebildet und die Temperiereinrichtung ist als eine metallische Beschichtung auf der Außenseite der Mediumführungseinrichtung gebildet. Das Verfahren ist dadurch ausgezeichnet, dass in einem ersten Schritt 101 die Temperiereinrichtung mit elektrischer Leistung beaufschlagt wird. In einem zweiten Schritt 102 wird der elektrische Widerstand der Temperiereinrichtung ermittelt und in einem dritten Schritt wird ein zu dem ermittelten Widerstandswert korrespondierender Ist-Temperaturwert ermittelt. Die hier als drei Schritte dargestellten Vorgänge können zeitgleich ablaufen.

In Figur 4 ist ein Verfahren zum Kalibrieren des chemischen Analysegerätes dargestellt. Die Kalibrierung kann zeitlich vor dem in Figur 3 dargestellten Verfahren durchgeführt werden, oder zu einem beliebigen anderen Zeitpunkt. In einem Kalibrierschritt 100a wird die Temperiereinrichtung mit einer elektrischen Leistung beaufschlagt. Wenn sich eine Temperatur eingestellt hat, wird in einem Schritt 100b die Temperatur mit einem Temperatursensor gemessen. Aus der gemessenen Temperatur wird in einem Schritt 100c der korrespondierende temperaturabhängige elektrische Widerstandswert berechnet. Diese Kalibrierdaten - Temperaturwert mit zugehörigem Widerstandswert - werden in einem Schritt 100d in der Steuer- und Auswerteeinheit hinterlegt. Um eine möglichst genaue Kalibrierung zu erreichen, können mehrere Temperaturen angefahren und die korrespondierenden Widerstandswerte ermittelt und hinterlegt werden.

Figur 5 zeigt ein Verfahren zur Regelung einer Temperatur auf einen Soll-Temperaturwert. In einem Schritt 104 wird ein Soll-Temperaturwert vorgegeben. In einem Schritt 105 wird ein - nach dem in Figur 3 dargestellten Verfahren bestimmter - Ist-Temperaturwert verglichen und die Regeldifferenz bestimmt. Die Regeldifferenz ist hierbei die Differenz zwischen dem Soll-Temperaturwert und dem Ist-Temperaturwert. In einem Schritt 106 wird auf Basis der Regeldifferenz eine Stellgröße für die Energieversorgungseinheit berechnet. In einem Schritt 107 beaufschlagt die Energieversorgungseinheit die Temperiereinrichtung mit einer entsprechend angepassten Energie, wodurch die Regeldifferenz ausgeregelt wird.

In Figur 6 ist noch einmal eine Mediumaufbereitungseinheit 2 mit einer Mediumführungseinrichtung 3 und einer als metallische Beschichtung 7 gebildeten Temperiereinrichtung 4 dargestellt. Über die federnden Stifte 18 der Kontaktvorrichtung 17 ist die Energieversorgungseinheit 5 in Form einer Spannungsquelle 9 mit der Temperiereinrichtung 4 verbunden, um diese mit elektrischer Leistung beaufschlagen zu können. Das Anlegen der Spannung U resultiert in einem Strom I, der mit dem Amperemeter 10 gemessen wird. Sowohl der Spannungswert als auch der Stromwert werden der Steuer- und Auswerteeinheit 6 zugeleitet, in der der korrespondierende elektrische Widerstandswert der Beschichtung 7 und der dazu korrespondierende Ist-Temperaturwert $T_{ist}$ bestimmt wird. Dieser Ist-Temperaturwert wird mit einem vorgegebenen Soll-Temperaturwert Tsoll verglichen und hieraus eine Regeldifferenz bestimmt. Die Steuer- und Auswerteeinheit 6 hat einen PID-Regler PID implementiert, mit dem eine Stellgröße für die Energieversorgungseinheit 5 berechnet wird. Die Energieversorgungseinheit 5 beaufschlagt die Temperiereinrichtung 4 mit einer entsprechend angepassten elektrischen Leistung, wodurch die Regeldifferenz ausgeregelt wird.

## Bezugszeichen

| 1 | chemisches Analysegerät |
|---|---|
| 2 | Mediumaufbereitungseinheit |
| 3 | Mediumführungseinrichtung |
| 4 | Temperiereinrichtung |
| 5 | Energieversorgungseinheit |
| 6 | Steuer- und Auswerteeinheit |
| 7 | metallische Beschichtung |
| 8 | Außenseite der Mediumführungseinrichtung |
| 9 | Spannungsquelle |
| 10 | Amperemeter |
| 11 | Injektor |
| 12 | Detektor |
| 13 | Trennsäule |
| 14 | Trägergas |
| 15 | Ofen |
| 16 | Computersystem |
| 17 | Kontaktvorrichtung |
| 18 | federnde Stifte |
| 19 | spiralförmig gewundene Drähte |
| 20 | Kontakte |
| 21 | Bereiche der Kontakte auf der Mediumführungseinrichtung |
| 22 | Teilbereiche ohne metallische Beschichtung |
| 23 | Bereiche mit metallischer Beschichtung |
| 24 | Trennsäulenanordnung |
| 100a | Beaufschlagung der Temperiereinrichtung mit elektrischer Leistung |
| 100b | Messung des Temperaturwertes der Temperiereinrichtung |
| 100c | Berechnung des korrespondierenden Widerstandswertes |
| 100d | Hinterlegung der Kalibrierdaten in der Steuer- und Auswerteeinheit |
| 101 | Beaufschlagung der Temperiereinrichtung mit elektrischer Leistung |
| 102 | Ermittlung des elektrischen Widerstandes der Temperiereinrichtung |
| 103 | Ermittlung des korrespondierenden Ist-Temperaturwertes |
| 104 | Vorgabe eines Soll-Temperaturwertes |
| 105 | Vergleich des Ist-Temperaturwertes mit dem Soll-Temperaturwert |
| 106 | Berechnung einer Stellgröße für die Energieversorgungseinheit mit einem Regelalgorithmus durch die Steuer- und Auswerteeinheit |
| 107 | Beaufschlagung der Temperiereinrichtung mit einer angepassten elektrischen Leistung |

## Patentansprüche

1. Chemisches Analysegerät (1) zur Analyse eines Mediums, mit einer Mediumaufbereitungseinheit (2), wobei die Mediumaufbereitungseinheit (2) eine Mediumführungseinrichtung (3) zum Führen des Mediums, eine Temperiereinrichtung (4) zum Temperieren des Mediums und eine Energieversorgungseinheit (5) zum Beaufschlagen der Temperiereinrichtung (4) mit elektrischer Leistung aufweist, und mit einer Steuer- und Auswerteeinheit (6) zum Ansteuern der Mediumaufbereitungseinheit (2) und zum Auswerten von Eigenschaften der Mediumaufbereitungseinheit (2) beschreibenden Messdaten, **dadurch gekennzeichnet,**
**dass** die Mediumführungseinrichtung (3) aus einem elektrisch isolierenden Material ausgebildet ist, dass die Temperiereinrichtung (4) als eine metallische Beschichtung (7) auf der Außenseite (8) der Mediumführungseinrichtung (3) gebildet ist, wobei die Energieversorgungseinheit (4) die metallische Beschichtung (7) zum Erzeugen einer Temperatur mit elektrischer Leistung beaufschlagt.

2. Chemisches Analysegerät (1) nach Anspruch 1, **dadurch gekennzeichnet, dass** die Mediumaufbereitungseinheit (2) als Injektor (11) oder als Trennsäulenanordnung (24) ausgebildet ist.

3. Chemisches Analysegerät (1) nach Anspruch 1, **dadurch gekennzeichnet, dass** die Mediumaufbereitungseinheit (2) als Detektor (12) ausgebildet ist, insbesondere als Flammenionisationsdetektor.

4. Chemisches Analysegerät (1) nach einem der Ansprüche 1 bis 3, **dadurch gekennzeichnet, dass** die metallische Beschichtung (7) aus Platin oder einer Platinlegierung besteht.

5. Chemisches Analysegerät (1) nach einem der Ansprüche 1 bis 4, **dadurch gekennzeichnet, dass** die Schichtdicke der metallischen Beschichtung (7) derart gewählt ist, dass sie einen derartigen elektrischen Widerstand aufweist, dass bei Beaufschlagung mit einer vorgebbaren elektrischen Leistung eine maximale vorgebbare Temperatur (T) erreicht wird.

6. Chemisches Analysegerät (1) nach einem der Ansprüche 1 bis 5, **dadurch gekennzeichnet, dass** die Mediumführungseinrichtung (3) rohrförmig ausgebildet ist und einen runden, elliptischen, rechteckigen oder quadratischen Querschnitt aufweist.

7. Chemisches Analysegerät (1) nach einem der Ansprüche 1 bis 6, **dadurch gekennzeichnet, dass** die Energieversorgungseinheit (5) die als metallische Beschichtung (7) ausgebildete Temperiereinrichtung (4) über eine federnd ausgebildete Kontaktvorrichtung (17) kontaktiert, die eine Federkraft auf die Mediumführungseinrichtung (3) ausübt, insbesondere wobei die Kontaktvorrichtung (17) eine Mehrzahl von federnden Stiften (18) aufweist, die um den Umfang der Mediumführungseinrichtung (3) in gleichen Abständen angeordnet sind.

8. Chemisches Analysegerät (1) nach einem der Ansprüche 1 bis 6, **dadurch gekennzeichnet, dass** die Energieversorgungseinheit (5) die als metallische Beschichtung (7) ausgebildete Temperiereinrichtung (4) über als spiralförmig gewundene Drähte (19) ausgebildete Kontakte (20) kontaktiert, wobei sich die spiralförmig gewundenen Drähte (19) um den Umfang der mit der Temperiereinrichtung (4) beschichteten Mediumführungseinrichtung (3) an die Temperiereinrichtung (4) anschmiegen.

9. Chemisches Analysegerät (1) nach einem der Ansprüche 7 oder 8, **dadurch gekennzeichnet, dass** die metallische Beschichtung (7) im Bereich der Kontakte (17, 18, 19, 20) eine erhöhte Oberflächenrauigkeit zur Verbesserung der Kontaktierung aufweist.

10. Chemisches Analysegerät (1) nach einem der Ansprüche 1 bis 9, **dadurch gekennzeichnet, dass** die metallische Beschichtung (7) in Umfangsrichtung der Mediumführungseinrichtung (3) gesehen unterbrochen ist, dass die Mediumführungseinrichtung (3) also in Umfangsrichtung gesehen Teilbereiche (22) aufweist, die keine metallische Beschichtung (7) aufweisen.

11. Mediumaufbereitungseinheit (2) für ein chemisches Analysegerät (1), mit einer Mediumführungseinrichtung (3) zum Führen des Mediums, mit einer Temperiereinrichtung (4) zum Temperieren des Mediums und mit einer Energieversorgungseinheit (5) zum Beaufschlagen der Temperiereinrichtung (4) mit elektrischer Leistung, **gekennzeichnet durch** die kennzeichnenden Merkmale der Patentansprüche 1 bis 10.

12. Verfahren zum Betreiben eines chemischen Analysegeräts (1), mit einer Mediumaufbereitungseinheit (2), wobei die Mediumaufbereitungseinheit (2) eine Mediumführungseinrichtung (3) zum Führen des Mediums, eine Temperiereinrichtung (4) zum Temperieren des Mediums, eine Energieversorgungseinheit (5) zum Beaufschlagen der Temperiereinrichtung mit elektrischer Leistung aufweist, und mit einer Steuer- und Auswerteeinheit (6) zum Ansteuern der Mediumaufbereitungseinheit (2) und zum Auswerten von Eigenschaften der Mediumaufbereitungseinheit (2) beschreibenden Messdaten, wobei die Mediumführungseinrichtung (3) aus einem elektrisch isolierenden Material ausgebildet ist, und wobei die Temperiereinrichtung (4) als eine metallische Beschichtung (7) auf der Außenseite der Mediumführungseinrichtung (3) gebildet ist,
wobei in einem ersten Schritt (101) die Temperiereinrichtung mit elektrischer Energie beaufschlagt wird,
wobei in einem zweiten Schritt (102) der elektrische Widerstand der Temperiereinrichtung ermittelt wird und
wobei in einem dritten Schritt (103) ein zu dem ermittelten Widerstandswert korrespondierender Ist-Temperaturwert ermittelt wird.

**13.** Verfahren nach Anspruch 12, **dadurch gekennzeichnet, dass** zur Ermittlung des Ist-Temperaturwertes vor dem ersten Verfahrensschritt eine Kalibrierung vorgenommen wird, wobei für die Kalibrierung die Temperiereinrichtung mit vorgegebener elektrischer Leistung beaufschlagt wird (100a), dass dann der Temperaturwert der Temperiereinrichtung gemessen wird (100b) und mit dem gemessenen Temperaturwert ein temperaturabhängiger Widerstandswert berechnet wird (100c) und dass die Kalibrierdaten in der Steuer- und Auswerteeinheit hinterlegt werden (100d).

**14.** Verfahren nach Anspruch 12, **dadurch gekennzeichnet, dass** ein Soll-Temperaturwert vorgegeben wird (104), dass der Ist-Temperaturwert mit dem Soll-Temperaturwert verglichen wird (105) und dass aufgrund der Regeldifferenz (Differenz zwischen Ist- und Soll-Temperaturwert) die Steuer- und Auswerteeinheit mit einem Regelalgorithmus eine Stellgröße für die Energieversorgungseinheit berechnet (106) und die Energieversorgungseinheit die Temperiereinrichtung mit einer entsprechend angepassten elektrischen Leistung beaufschlagt (107), wodurch die Regeldifferenz ausgeregelt wird.

**15.** Verfahren nach Anspruch 14, **dadurch gekennzeichnet, dass** der Regelalgorithmus in der Steuer- und Auswerteeinheit einen PI-Regler oder einen PID-Regler implementiert.

Fig. 1a

Fig. 1b

EP 3 401 676 A1

Fig. 2a

Fig. 2b

Fig. 2c

Fig. 2d

Fig. 2e

**Fig. 3**

**Fig. 4**

Fig. 5

Fig. 6

Europäisches
Patentamt

European
Patent Office

Office européen
des brevets

## EUROPÄISCHER RECHERCHENBERICHT

Nummer der Anmeldung

EP 18 17 0597

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 112 507 A1 (VARIAN B V [NL]) 28. Oktober 2009 (2009-10-28) | 1,2,6, 11-14 | INV. G01N30/30 |
| Y | * Absätze [0002], [0003], [0023], [0027], [0032], [0035] * | 3-5, 7-10,15 | |
| Y | EP 0 160 224 A2 (IBM [US]) 6. November 1985 (1985-11-06) * Seite 5, Zeile 11 - Seite 6, Zeile 5 * | 3,10 | |
| Y | WO 97/14957 A1 (THERMEDICS DETECTION INC [US]) 24. April 1997 (1997-04-24) | 15 | |
| A | * Seite 35, Zeile 15 - Seite 37, Zeile 24 * | 1-14 | |
| Y | US 5 114 439 A (YOST RICHARD A [US] ET AL) 19. Mai 1992 (1992-05-19) * Spalte 5, Zeile 55 - Zeile 66 * | 5 | |
| Y | WO 2014/117093 A1 (BAL SEAL ENGINEERING INC [US]; BALSELLS PETER J [US]; DAWSON RICHARD []) 31. Juli 2014 (2014-07-31) * Seite 1, Zeile 11 - Zeile 21; Abbildung 2 * * Seite 7, Zeile 29 - Seite 8, Zeile 14 * | 4,7-9 | |
| Y | WO 01/48469 A2 (THERMOQUEST ITALIA SPA [IT]; MUNARI FAUSTO [IT]; ZILIOLI GIACINTO [IT]) 5. Juli 2001 (2001-07-05) * Seite 3, Zeile 7 - Seite 4, Zeile 13 * | 15 | |

RECHERCHIERTE SACHGEBIETE (IPC)

G01N
G05D

Der vorliegende Recherchenbericht wurde für alle Patentansprüche erstellt

| Recherchenort | Abschlußdatum der Recherche | Prüfer |
|---|---|---|
| München | 1. Oktober 2018 | Müller, Thomas |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 18 17 0597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2018

| Im Recherchenbericht angeführtes Patentdokument | | Datum der Veröffentlichung | Mitglied(er) der Patentfamilie | | Datum der Veröffentlichung |
|---|---|---|---|---|---|
| EP 2112507 | A1 | 28-10-2009 | KEINE | | |
| EP 0160224 | A2 | 06-11-1985 | DE | 3586467 D1 | 17-09-1992 |
| | | | DE | 3586467 T2 | 18-03-1993 |
| | | | EP | 0160224 A2 | 06-11-1985 |
| | | | JP | S60231165 A | 16-11-1985 |
| | | | US | 4869876 A | 26-09-1989 |
| WO 9714957 | A1 | 24-04-1997 | DE | 69637079 T2 | 24-01-2008 |
| | | | EP | 0876607 A1 | 11-11-1998 |
| | | | US | 5808178 A | 15-09-1998 |
| | | | WO | 9714957 A1 | 24-04-1997 |
| US 5114439 | A | 19-05-1992 | KEINE | | |
| WO 2014117093 | A1 | 31-07-2014 | EP | 2948693 A1 | 02-12-2015 |
| | | | JP | 6216805 B2 | 18-10-2017 |
| | | | JP | 2016507711 A | 10-03-2016 |
| | | | US | 2014219713 A1 | 07-08-2014 |
| | | | WO | 2014117093 A1 | 31-07-2014 |
| WO 0148469 | A2 | 05-07-2001 | AT | 427484 T | 15-04-2009 |
| | | | EP | 1203232 A2 | 08-05-2002 |
| | | | IT | MI992708 A1 | 27-06-2001 |
| | | | JP | 2003518621 A | 10-06-2003 |
| | | | US | 2002178912 A1 | 05-12-2002 |
| | | | WO | 0148469 A2 | 05-07-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012007403 A1